# FASCICULE DE BREVET EUROPEEN

(11) **EP 0 508 866 B1**
(45) Date de publication et mention de la délivrance du brevet: **21.09.1994**
(21) Numéro de dépôt: 92400943.4
(22) Date de dépôt: 03.04.1992
(51) Int. Cl.: G01S 3/36, G01S 7/02

(54) **Dispositif de détection de radars pour la navigation**
Navigationseinrichtung zur Radardetektion
Navigation apparatus for the detection of radar

(30) Priorité: 09.04.1991 FR 9104295
(43) Date de publication de la demande: 14.10.1992
(73) Titulaire: THOMSON-CSF, 75008 Paris (FR)
(72) Inventeur: Keller, René, F-92045 Paris la Défense (FR)
(74) Mandataire: Benoit, Monique

(56) Documents cités:
- DE-A- 2 626 671
- US-A- 3 720 946
- US-A- 4 929 958
- US-A- 5 001 777
- PATENT ABSTRACTS OF JAPAN vol. 4, no. 188 (P-42)(670) 24 Décembre 1980

## Description

L'invention concerne le domaine de la détection des radars de navigation ou radars marine, équipant généralement les moyens et gros bateaux, appliqué notamment à la navigation des petits bateaux de plaisance ou de pêche, ne disposant pas de radars de navigation et plus généralement à tous les bateaux comme complément pour la sécurité en bénéficiant ainsi d'une veille "alerte par proximité" d'autres bateaux, pouvant être permanente et automatique. L'invention peut aussi être appliquée à la navigation aérienne, et notamment être utilisée par des avions de tourisme pour leur permettre de détecter la présence de radars par exemple, équipant les gros porteurs.

On constate que beaucoup de collisions entre petits bateaux de plaisance et gros bateaux ont lieu chaque année sur toutes les mers et océans du monde, soit le jour par mauvaise visibilité (pluie, brume...), soit la nuit. Parmi les causes occasionnant ces accidents retenons le fait que l'indicateur radar du gros bateau n'est pas surveillé en permanence par l'homme de quart ou le fait que la surface équivalente radar des petits bateaux fabriqués en bois ou en matière plastique tels que canots ou voiliers par exemple est relativement faible. Elle ne donne lieu à des échos radar qu'à courte distance, d'où une détection tardive de la part du gros bateau et une collision éventuelle (et ce, malgré les réflecteurs radars en forme de trièdres, installés sur les mâts).

Il existe sur le marché des radars de navigation destinés à équiper les petits et gros bateaux. Néanmoins de tels radars sont des appareils de mesure sophistiqués et précis, nécessitant une maintenance compliquée, et relativement coûteux et encombrants pour un petit bateau. De plus, le navigateur doit regarder l'écran fréquemment et interpréter les plots et images visualisées, ce qui constitue une contrainte d'exploitation.

Un brevet US-A-5 001 777 décrit un système de détection de signaux émanant d'un radar éloigné. Il comporte notamment deux antennes directrives détectant des signaux émis dans des secteurs de gisement distincts, les antennes étant reliées à des circuits de détection et de traitement, la détection d'un signal provoquant un affichage visuel ou sonore.

L'invention consiste en un dispositif de détection pour la navigation tel que défini par la revendication 1.

L'invention constitue un dispositif d'alerte anti-collision, simple, peut coûteux, peu encombrant, facile d'exploitation, capable de fonctionner en permanence et par tout temps, à installer notamment sur les petits bateaux de plaisance ou de pêche pour détecter les radars de navigation équipant les moyens et gros bateaux.

L'invention permettra de fournir avantageusement une indication essentielle et fort précieuse pour la sécurité des petits bateaux : une indication de présence des radars de navigation (donc des gros bateaux) suivant le gisement. Cette indication peut par exemple être visuelle. L'invention peut par ailleurs fournir de plus une autre information importante : une indication de présence en proximité des gros bateaux permettant par exemple de déclencher une alerte automatique avec un préavis suffisant pour changer de cap et éviter une éventuelle collision. L'indication visuelle peut aussi être remplacée ou doublée d'une indication sonore. La distance de sécurité correspondant au déclenchement de l'alarme peut être par exemple de l'ordre de 0,56 à 0,93 km (0,3 à 0,5 nautique). Un dispositif permet le réglage de cette distance d'alerte.

Il faut noter que tous les moyens et gros bateaux, civils et militaires, sont équipés de radars de navigation du commerce, vendus dans le monde entier et dont les caractéristiques sont bien connues en particulier leur fréquence d'émission en bande X, 9,2 GHz ± 30 MHz en polarisation horizontale. Ces caractéristiques ne sont pas mesurées dans l'invention mais utilisées pour assurer les deux fonctions précitées. En effet, l'invention n'a pas pour but de remplacer un radar qui est un dispositif actif, mais d'utiliser les caractéristiques des radars de navigation pour évaluer leur gisement et leur distance approximatifs par mesure du niveau détecté. C'est un dispositif entièrement passif.

Les avantages apportés par cette invention consistent essentiellement à permettre notamment aux petits bateaux de plaisance ou de pêche de s'équiper d'un dispositif anti-collision fiable (de par sa simplicité), peu coûteux, peu encombrant, facile à disposer, sans contraintes de maintenance et ne nécessitant pas d'attention ou de connaissances particulières en exploitation, laissant le ou les navigateurs libres d'opérer par ailleurs en toute sécurité.

De plus, en dehors même de l'aspect anti-collision, le dispositif indique la présence de bateaux plus ou moins lointains en dehors de la zone d'alerte, il permet ainsi au navigateur, en cas d'avarie de se diriger dans la direction d'une émission donc d'un bateau voisin pour chercher de l'aide.

L'invention est composée de deux parties ou modules, un module de détection hyperfréquence et un module de signalisation. Dans ce qui suit, elle est décrite plus en détail, dans le cas d'une application maritime et d'une réalisation comprenant quatre antennes. Néanmoins, il est possible de réaliser l'invention avec seulement deux antennes ou plus, cela dépend de la précision souhaitée sur l'information de gisement.

La description utilise les figures annexées qui représentent :
- la figure 1, le synoptique d'un mode de réalisation possible du module de détection ;
- la figure 2, le synoptique d'un mode de réalisation possible du module de signalisation ;
- la figure 3, une réalisation possible des modules précités.

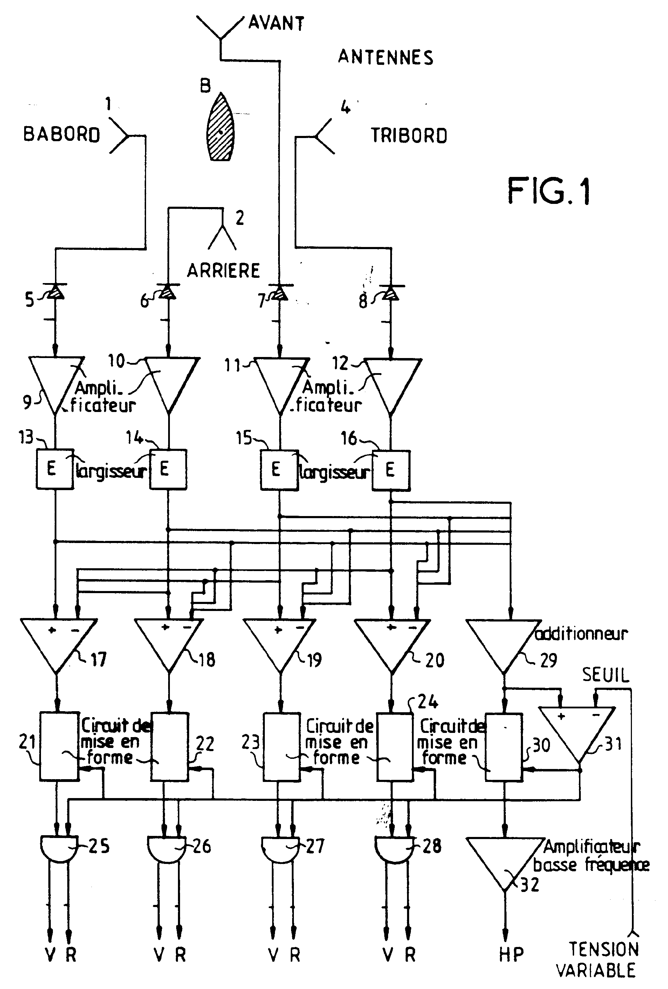

La description commence par le module de détection présenté en figure 1 ; celui-ci, installé par exemple sur le mât du voilier, le toit de la cabine ou tout autre endroit dégagé, possède les fonctions suivantes :
- détection des émissions radar ;
- évaluation d'un niveau d'alerte si les radars détectés sont très proches (donc signal reçu de fort niveau) avec génération d'un signal sonore particulier ;
- évaluation du gisement sectoriel et d'une zone de distance des émissions radar détectées.

L'invention ne cherchant pas à détecter les radars très lointains, il n'est pas nécessaire d'installer ce module au sommet du mât ce qui simplifie son installation. Le module de détection comprend quatre antennes 1, 2, 3 et 4 disposées à 90° et protégées par un radôme en matière plastique. Elles couvrent les quatre secteurs de gisement avant, bâbord, arrière et tribord suivant le bateau B. Les antennes peuvent être du type cornet ou du type dipôle ou patch, réalisées par exemple en circuit imprimé, fonctionnant en polarisation horizontale avec un diagramme de rayonnement en gisement ayant une ouverture d'environ 90° à 3 dB. Elles alimentent chacune une voie de détection et de traitement. Les émissions reçues par les quatre antennes sont détectées par les diodes Schottky 5, 6, 7 et 8 reliées par leur cathode respectivement aux antennes 1, 2, 3 et 4 et reliées par leur anode respectivement aux entrées des amplificateurs 9, 10, 11 et 12 qui amplifient les signaux d'émissions reçues. Ces signaux étant impulsionnels, ils sont élargis par les élargisseurs 13, 14, 15 et 16 reliés à leur entrée respectivement aux sorties des amplificateurs 9, 10, 11 et 12. Cette technique permet de conserver l'information d'amplitude des impulsions tout en rallongeant leur durée, de façon à réduire les bandes passantes des circuits intégrés situés en aval, donc leur coût. Les élargisseurs précités sont constitués de résistances et condensateurs, associés à un amplificateur opérationnel en circuit intégré.

Les circuits de traitement ci-dessus, et les suivants peuvent être par exemple câblés sur une carte de circuit imprimé. Ils comprennent :
- un circuit additionneur 29 dont l'entrée est reliée aux sorties des élargisseurs 13, 14, 15 et 16. Ce circuit permet d'additionner les quatre niveaux reçus sur les quatre antennes. Le signal de sortie de l'additionneur 29 est mis en forme dans le circuit de mise en forme 30 dont une entrée est reliée à la sortie de l'additionneur 29. Ce circuit de mise en forme est un circuit de type monostable par exemple. Le signal de sortie du circuit 30 attaque le haut parleur HP du module de signalisation via l'amplificateur basse fréquence 32 dont l'entrée est reliée à la sortie du circuit de mise en forme 30 et la sortie au haut parleur HP. Le haut parleur permet par exemple d'écouter la période de répétition des impulsions radar dont la source est située dans un cercle de plusieurs kilomètres par exemple. Si l'amplitude des impulsions radar détectées dépassent un certain seuil (réglable par exemple par potentiomètre ou par commutateur sur valeurs discrètes) le comparateur différentiel 31 dont l'entrée + est reliée à la sortie de l'additionneur 29 et l'entrée - à la sortie du système de réglage de seuil précité commandé par une tension variable excite le circuit de mise en forme 30 dont une entrée est reliée à sa sortie pour générer par exemple un signal sonore d'alerte dans le haut parleur HP via l'amplificateur 32 ;
- quatre amplificateurs différentiels 17, 18, 19 et 20, chacun recevant sur son entrée + le signal impulsionnel radar amplifié issu de la voie de détection correspondante, et sur son entrée - la somme des signaux des trois autres voies comme l'indique la figure 1. Les liaisons sont réalisées de la manière suivante : l'amplificateur différentiel 17 a son entrée + reliée à la sortie de l'élargisseur 13 et son entrée - reliée aux sorties des élargisseurs 14, 15 et 16, l'amplificateur différentiel 18 a son entrée + reliée à la sortie de l'élargisseur 14 et son entrée - reliée aux sorties des élargisseurs 13, 15 et 16, l'amplificateur différentiel 19 a son entrée + reliée à la sortie de l'élargisseur 15 et son entrée - reliée aux sorties des élargisseurs 13, 14 et 16, l'amplificateur différentiel 20 a son entrée + reliée à la sortie de l'élargisseur 16 et son entrée - reliée aux sorties des élargisseurs 13, 14 et 15.

Cette configuration présente l'avantage suivant : si un radar se trouve dans le secteur bâbord (1) par exemple, mais à très faible distance, inférieure à 100 mètres environ, le signal sur la voie de détection correspondante sera fort et permettra d'activer les indicateurs associés à ce secteur de gisement. Mais, les trois autres antennes, de faible directivité de par leur nature, recevront le signal fort dans leurs lobes secondaires et/ou diffus, ce qui risque de provoquer une détection dans les trois autres voies activant ainsi tous les indicateurs sectoriels indistinctement. Un tel fonctionnement est très gênant pour le navigateur. Les voies différence permettent donc au seul signal de plus haut niveau d'activer les indicateurs V, R correspondants à son secteur de gisement, après comparaison dans chaque amplificateur différentiel 17, 18, 19 et 20 des niveaux détectés relatifs. Les amplificateurs 17, 18, 19 et 20 ont leur sortie reliée respectivement aux entrées des circuits de mise en forme 21, 22, 23 et 24 de type monostable par exemple, produisant une impulsion suffisamment élargie et calibrée en niveau pour activer les indicateurs sectoriels V, R.

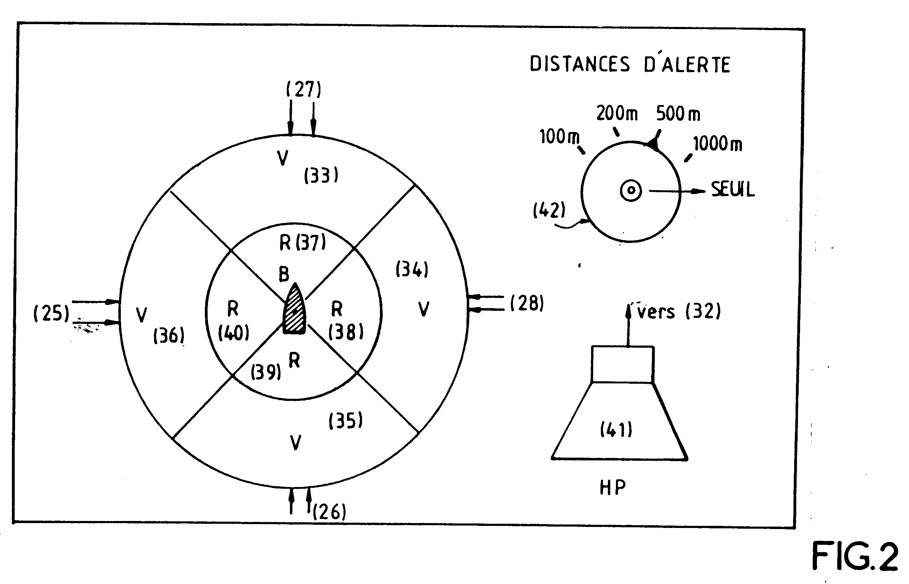

On laisse provisoirement le module de détection pour décrire le module de signalisation présenté en figure 2. Celui-ci peut être installé dans la cabine du petit bateau ou à proximité de la barre. Ce module, recevant tous les signaux délivrés par le module de détection donne deux indications au navigateur :
- une indication de gisement sectoriel, avant, bâbord, arrière et tribord, de la source d'émissions radar réalisée par exemple suivant la figure 2, par allumage d'ampoules ou de LED noyées dans des secteurs de plexiglas, avec le code suivant :
- couleur verte allumée, zones 33, 34, 35 ou 36 :
   radars lointains
- couleur rouge allumée, zones 37, 38, 39 et 40 :
   radars proches.

A ce stade de la description, il est nécessaire de revenir à celle du module de détection et plus particulièrement sur le rôle des portes logiques 25, 26, 27 et 28 en sortie de ce module et représentées sur les figures 1 et 2. En effet, les signaux d'activation des indicateurs lumineux transitent par ces portes dont chacune possède une entrée commandée par le signal de sortie du comparateur 31 de telle manière que suivant le niveau détecté, une zone rouge ou une zone verte s'allume, le seuil correspondant étant par exemple le même que celui de l'alerte sonore.

A cet effet, les sorties des circuits de mise en forme 21, 22, 23 et 24 sont reliées respectivement à une entrée des portes logiques 25, 26, 27 et 28, l'autre entrée de ces portes 25, 26, 27 et 28 est reliée à la sortie de l'amplificateur différentiel 31, enfin chacune des portes 25, 26, 27 et 28 a une sortie reliée à un indicateur V et une sortie reliée à un indicateur R, activant respectivement une zone de couleur verte et une zone de couleur rouge.

La seconde indication fournie par le module de signalisation est une information sonore transmise par le haut parleur 41 qui permet d'écouter la période de répétition des impulsions radar détectées à chaque balayage des faisceaux et d'émettre un signal sonore particulier (type buzzer par exemple) pour les radars proches, c'est-à-dire quand le seuil d'alerte est dépassé.

Ce module comprend en outre un réglage manuel 42 de la distance d'alerte, au choix du navigateur. La figure 2 montre quatre distances d'alerte : 100 m, 200 m, 500 m et 1000 m, graduées sur le module de signalisation. C'est une possibilité citée à titre d'exemple.

La durée de passage du lobe principal d'un radar de navigation, au niveau du détecteur, est de l'ordre de 20 millisecondes, quelques dizaines d'impulsions radar sont donc détectées à chaque passage. Pour avoir un éclat lumineux suffisant, surtout le jour, chaque lampe ou LED sera allumée pendant au moins 0,5 seconde. Un secteur rouge allumé en mode "flash" pulsé par exemple, indique la présence d'un radar (donc d'un bateau) très proche. C'est une alerte visuelle. Un secteur vert allumé fugitivement indique la présence de radars lointains.

Les deux modules précités sont reliés par un câble multiconducteur standard. L'ensemble peut être alimenté électriquement par la batterie de bord 12 Volts ou 24 Volts. Par ailleurs, tous les circuits utilisés pour la réalisation de ce dispositif peuvent être de type standard.

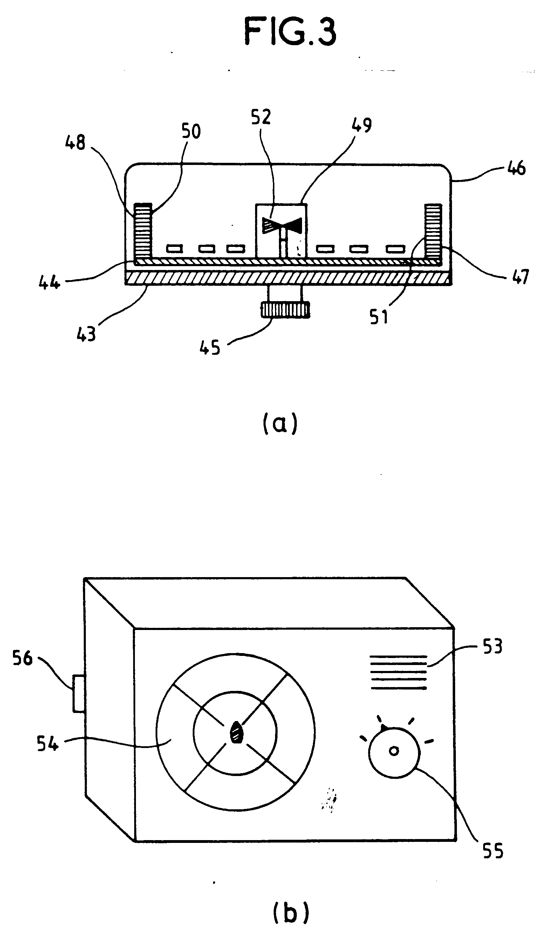

Une possibilité de réalisation est décrite ci-dessous suivant la figure 3.

Le module de détection présenté par la figure 3a peut être conçu en forme de cylindre. Le fond est constitué par une embase circulaire 43 recevant un circuit imprimé 44 et le connecteur multiconducteur 45. Le circuit imprimé 44 contient les fonctions électroniques de détection et de traitement. La paroi cylindrique est un radôme de protection 46 par exemple en matière plastique. La face intérieure du radôme peut contenir des circuits imprimés souples sur lesquels sont gravées les antennes. Une autre solution consiste en antennes gravées sur quatre petits circuits imprimés 47, 48 et 49 (trois seulement sont représentés sur la figure) de forme carrée ou circulaire et placés verticalement sur le circuit imprimé 44 à 90° les uns par rapport aux autres. Chacun des circuits imprimés d'antenne 47, 48, et 49 contient un plan réflecteur 50, 51 et un dipôle de détection 52 accordé suivant la bande d'émission des radars de navigation à détecter. Les quatre diodes Schottky de réception sont soudées directement en sortie du dipôle 52.

L'ensemble est étanche pour être monté à l'extérieur. L'embase 43 peut être pourvue de trous taraudés pour fixer le module sur le mât par exemple par l'intermédiaire d'une équerre de fixation. Le module de signalisation présenté sur la figure 3b est constitué par un boîtier en plastique regroupant le haut parleur 53, l'indicateur à ampoule ou à LED, voire même à cristaux liquides 54, le réglage du seuil de distance d'alerte 55 et le connecteur du câble multiconducteur 56.

Il peut être envisagé des variantes possibles à cette invention. Une première consiste à remplacer les quatre voies de détection par une seule et d'utiliser un commutateur à diode pin. Cette solution réduit le nombre des composants donc le coût du dispositif. Elle a néanmoins l'inconvénient de diminuer la probabilité de détection.

Une autre variante, plus sophistiquée consiste en la manière suivante. Les amplitudes relatives des signaux issus des élargisseurs sont comparées en tenant compte des diagrammes des antennes. Un algorithme simple du type "loi parabolique" ou "loi barycentrique " programmé pour un microprocesseur permet alors d'afficher le gisement des radars de navigation détectés à quelques degrés près sur un indicateur contenant 36 LED rouges et 36 LED vertes, soit une LED tous les 10°. Une autre solution pour augmenter la précision en gisement consiste à augmenter le nombre d'antennes. Une variante peut consister par exemple en un dispositif avec huit antennes avec une seule voie de détection et un commutateur à diode pin. Par ailleurs, en ajoutant un comparateur supplémentaire et des portes logiques, il est possible de créer une troisième zone intermédiaire en distance, de couleur orange par exemple, entres les zones rouges et vertes. Cette variante permet de suivre l'évolution d'un radar détecté, donc de son bateau porteur, en éloignement ou en rapprochement, après franchissement des différentes zones.

## Revendications

1. Dispositif de détection, pour la navigation, de signaux émanant d'un radar éloigné, constitué d'un module de détection de signaux hyperfréquence couplé à un module de signalisation, le module de détection comportant au moins deux antennes directives (1, 2, 3, 4) couvrant chacune un secteur de gisement et étant couplées chacune à un circuit de détection (5, 6, 7, 8), les circuits de détection étant reliés à des circuits de traitement de manière à rendre perceptible de façon visuelle ou sonore au moyen du module de signalisation le secteur de gisement où se situe le radar détecté, caractérisé en ce que les circuits de traitement contiennent autant d'amplificateurs différentiels (17, 18, 19, 20) qu'il y a d'antennes (1, 2, 3, 4), chaque amplificateur différentiel étant associé à une seule antenne et réalisant la différence entre le signal reçu par son antenne associée et la somme des signaux reçus par les autres antennes pour définir quelle antenne, donc quel secteur de gisement délivre le signal le plus puissant.

2. Dispositif de détection selon la revendication 1, caractérisé en ce que les circuits de traitement contiennent des circuits de mise en forme (21, 22, 23, 24) de signaux issus des amplificateurs différentiels (17, 18, 19, 20) et dont les sorties sont combinées à l'entrée de portes logiques (25, 26, 27, 28) à un signal de seuil de proximité réglable issu d'un amplificateur différentiel (31), les sorties desdites portes logiques attaquant des indicateurs de gisement ou de proximité.

3. Dispositif de détection selon l'une quelconque des revendications précédentes, caractérisé en ce que les circuits de traitement contiennent un circuit additionneur (29) additionnant les signaux reçus par les antennes (1, 2, 3, 4).

4. Dispositif de détection selon selon la revendication 3, caractérisé en ce que les circuits de traitement contiennent un circuit de mise en forme (30) du signal issu du circuit additionneur (29), lequel circuit de mise en forme est commandé par le signal de seuil de proximité réglable issu de l'amplificateur différentiel (31) et dont la sortie est reliée à un amplificateur basse fréquence (32) dont la sortie attaque un haut parleur (HP).

5. Dispositif de détection selon la revendication 1, caractérisé en ce que le module de signalisation comprend des indicateurs de gisement sectoriel ou de zones de proximité (33, 34, 35, 36, 37, 38, 39, 40).

6. Dispositif de détection selon la revendication 1, caractérisé en ce que le module de détection comprend au moins un haut parleur (53), un indicateur à ampoule ou à cristaux liquides (54) et un réglage du seuil de distance d'alerte (55).

## Patentansprüche

1. Vorrichtung zur Erfassung von Signalen einer entfernten Radarquelle für Navigationszwecke, bestehend aus einem Mikrowellenerfassungsmodul, der mit einem Signalisationsmodul gekoppelt ist, wobei der Erfassungsmodul mindestens zwei Richtantennen (1, 2, 3, 4) besitzt, die je einen Peilwinkelsektor abdecken und je mit einer Detektorschaltung (5, 6, 7, 8) gekoppelt sind, wobei die Detektorschaltungen mit Verarbeitungsschaltungen so verbunden sind, daß optisch oder akustisch mit Hilfe des Signalisationsmoduls der Peilwinkelsektor erfaßbar ist, in dem die erfaßte Radarquelle liegt, dadurch gekennzeichnet, daß die Verarbeitungsschaltungen ebensoviele Differentialverstärker (17, 18, 19, 20) besitzen, wie es Antennen (1, 2, 3, 4) gibt, daß jeder Differentialverstärker einer einzigen Antenne zugeordnet ist und die Differenz zwischen dem von seiner zugeordneten Antenne empfangene Signal und der Summe der von den anderen Antennen empfangenen Signale bildet, um zu definieren, welche Antenne und damit welcher Peilwinkelsektor das Signal größter Leistung liefert.

2. Erfassungsvorrichtung nach Anspruch 1, dadurch gekennzeichnet, daß die Verarbeitungsschaltungen Formgebungsschaltungen (21, 22, 23, 24) für von den Differentialverstärkern (17, 81, 19, 20) kommende Signale enthalten und daß die Ausgangssignale dieser Formgebungsschaltungen auf der Eingangsseite von logischen Toren (25, 26, 27, 28) mit einem von einem Differentialverstärker (31) kommenden, einen regelbaren Abstand definierenden Schwellwertsignal kombiniert werden und daß die Ausgänge dieser logischen Tore Anzeigeorgane für den Peilwinkel oder die Entfernung ansteuern.

3. Erfassungsvorrichtung nach einem beliebigen der vorhergehenden Ansprüche, dadurch gekennzeichnet, daß die Verarbeitungsschaltungen einen Addierkreis (29) enthalten, der die von den Antennen (1, 2, 3, 4) empfangenen Signale addiert.

4. Erfassungsvorrichtung nach Anspruch 3, dadurch gekennzeichnet, daß die Verarbeitungsschaltungen eine Formgebungsschaltung (30) für das vom Addierkreis (29) kommende Signal enthalten, die von dem Schwellwertsignal gesteuert wird, das den regelbaren Abstand definiert und vom Differentialverstärker (31) kommt, wobei der Ausgang der Formgebungsschaltung den Lautsprecher (HP) ansteuert.

5. Erfassungsvorrichtung nach Anspruch 1, dadurch gekennzeichnet, daß der Signalisationsmodul nach Winkelsektoren oder Entfernungszonen geordnete Anzeigeorgane (33, 34, 35, 36, 37, 38, 39, 40) enthält.

6. Erfassungsvorrichtung nach Anspruch 1, dadurch gekennzeichnet, daß der Detektormodul mindestens einen Lautsprecher (53), ein Anzeigeorgan mit Lampen oder Flüssigkristallen (54) und einen Regelknopf für die Schwelle der Alarmentfernung (55) enthält.

## Claims

1. Detection device, for navigation, for signals emanating from a remote radar, consisting of a microwave signals detection module coupled to a signalling module, the detection module including at least two directional antennas (1,2,3,4) each covering a bearing sector and each being coupled to a detection circuit (5,6,7,8), the detection circuits being connected to processing circuits so as to render the bearing sector in which the detected radar is situated perceptible visually or audibly by means of the signalling module, characterized in that the processing circuits contain as many differential amplifiers (17,18,19,20) as there are antennas (1,2,3,4), each differential amplifier being associated with a single antenna and forming the difference between the signal received by its associated antenna and the sum of the signals received by the other antennas so as to define which antenna, and hence which bearing sector, is delivering the most powerful signal.

2. Detection device according to Claim 1, characterized in that the processing circuits contain shaping circuits (21,22,23,24) for signals arising from the differential amplifiers (17,18,19,20) and whose outputs are combined at the input of logic gates (25,26,27,28) with an adjustable proximity threshold signal arising from a differential amplifier (31), the outputs from the said logic gates driving bearing or proximity indicators.

3. Detection device according to any one of the preceding claims, characterized in that the processing circuits contain an adder circuit (29) adding up the signals received by the antennas (1,2,3,4).

4. Detection device according to Claim 3, characterized in that the processing circuits contain a shaping circuit (30) for the signal arising from the adder circuit (29), which shaping circuit is controlled by the adjustable proximity threshold signal arising from the differential amplifier (31) and whose output is connected to a low-frequency amplifier (32) whose output drives a loudspeaker (LP).

5. Detection device according to Claim 1, characterized in that the signalling module comprises indicators of sectorial bearing or of proximity zones (33,34,35,36,37,38,39,40).

6. Detection device according to Claim 1, characterized in that the detection module comprises at least one loudspeaker (53), a liquid-crystal or bulb-based indicator (54) and an adjustment for the alert range threshold (55).
